# FASCICULE DE BREVET EUROPEEN

(11) **EP 1 389 560 B1**
(45) Date de publication et mention de la délivrance du brevet: **29.11.2006**
(21) Numéro de dépôt: 03291699.1
(22) Date de dépôt: 07.07.2003
(51) Int. Cl.: B60P 1/14, B60R 1/00, B60S 9/18

(54) **Lève benne, monte-charge pour remorque**
Aufzug zum Kippen eines Behälters auf einem Anhänger
Tipping hoist for a trailer

(30) Priorité: 10.07.2002 FR 0208705
(43) Date de publication de la demande: 18.02.2004
(73) Titulaire: Bernard, Pascal, 45160 Olivet (FR)
(72) Inventeur: Bernard, Pascal, 45160 Olivet (FR)

(56) Documents cités:
- DE-U- 9 303 905
- GB-A- 2 245 230
- US-A- 1 442 958
- US-B1- 6 239 926

## Description

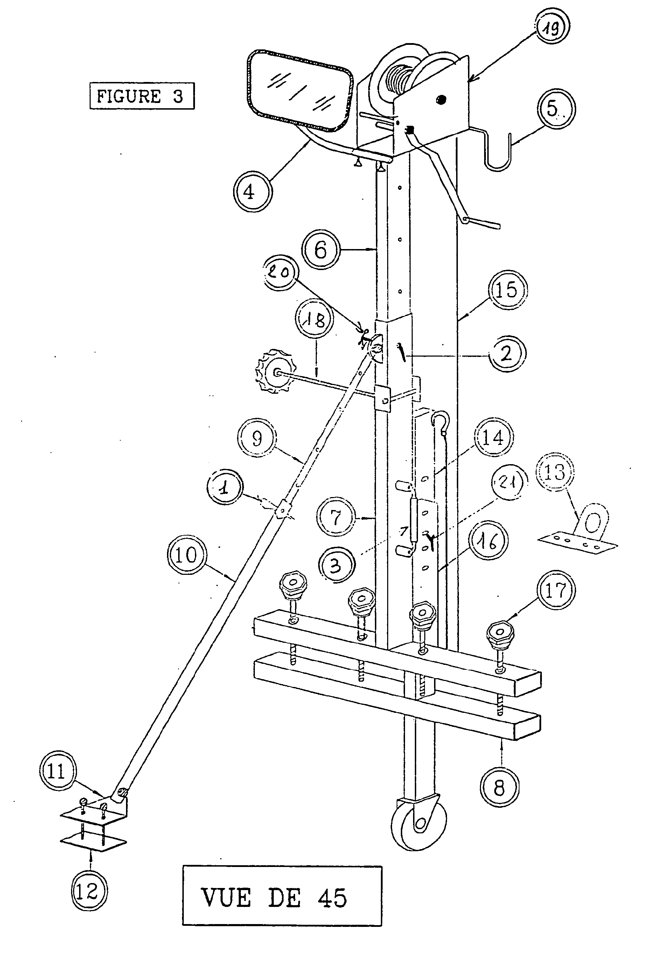

La présente invention est un dispositif de lève benne, de monte charge et multi-usages pour les remorques particulières (figure 3), elle est constituée par un mât en acier formé de deux tubes coulissants l'un dans l'autre, mâle (6) et femelle (7), d'une platine horizontale (8), d'un tirant réglable en longueur (9 et 10), d'un ensemble de pièces de fixation coté attelage (11 et 12) et d'une patte (13) percée de trous coté benne permettant d'accrocher le crochet de levage, un porte vélos (5), un rétroviseur (4), un porte roue de secours (7) et une roue jockey réglable (14).

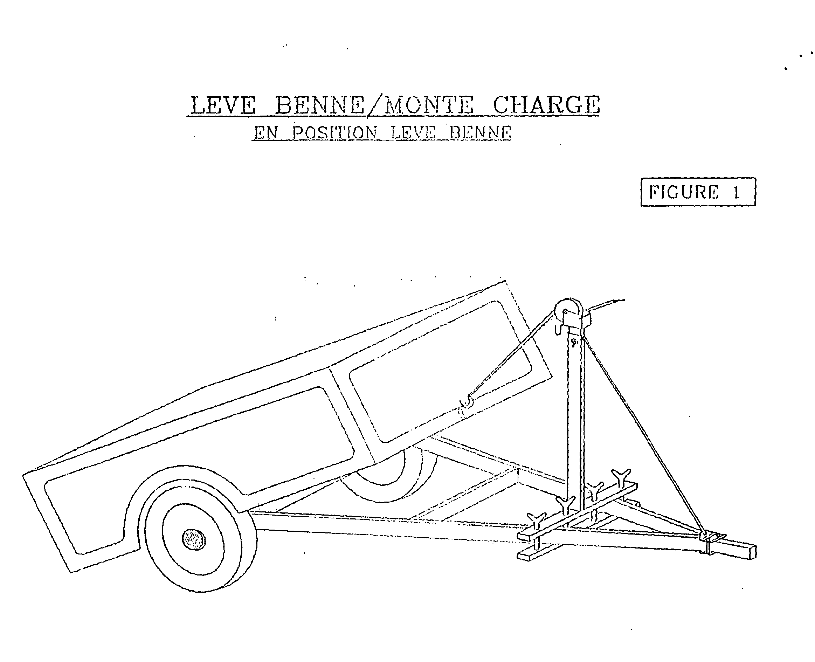

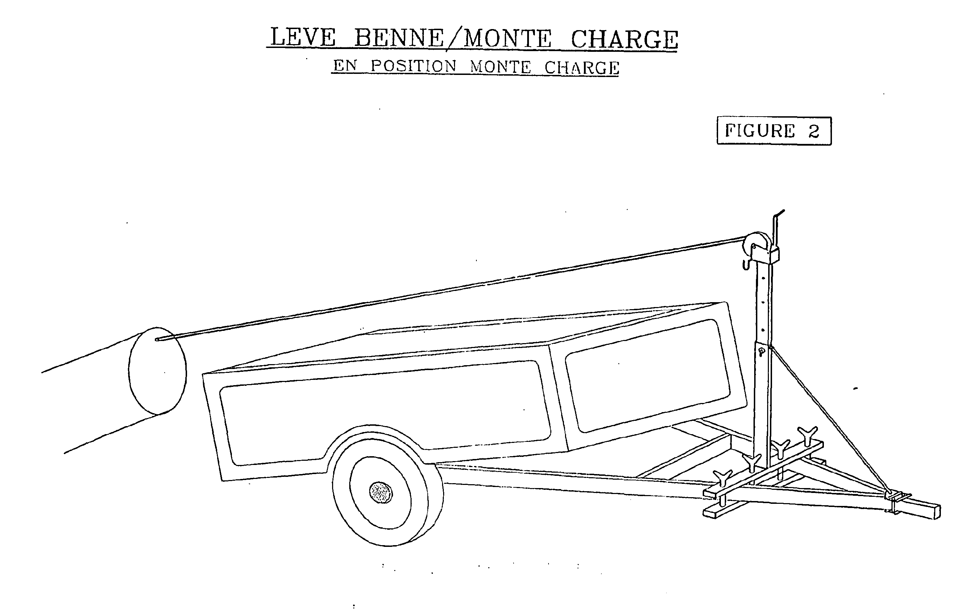

Actuellement lorsqu'une remorque basculante est chargée de matériaux il est difficile de lever celle-ci sans déployer une énergie intense, mal au dos ou doigts écrasés (figure 1). Lorsque vous voulez monter une charge lourde par l'arrière d'une remorque à benne basculante ou non, ce dispositif permet d'y remédier (figure 2).

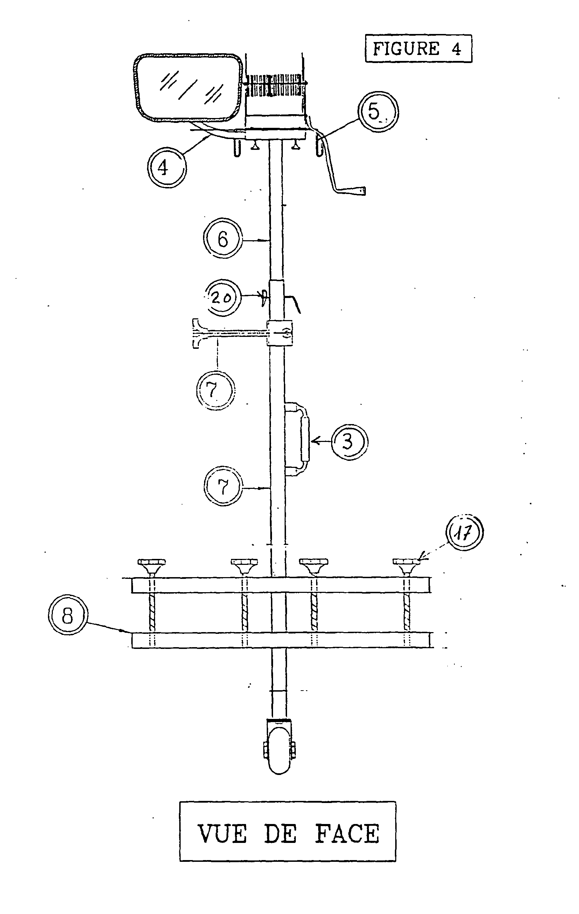

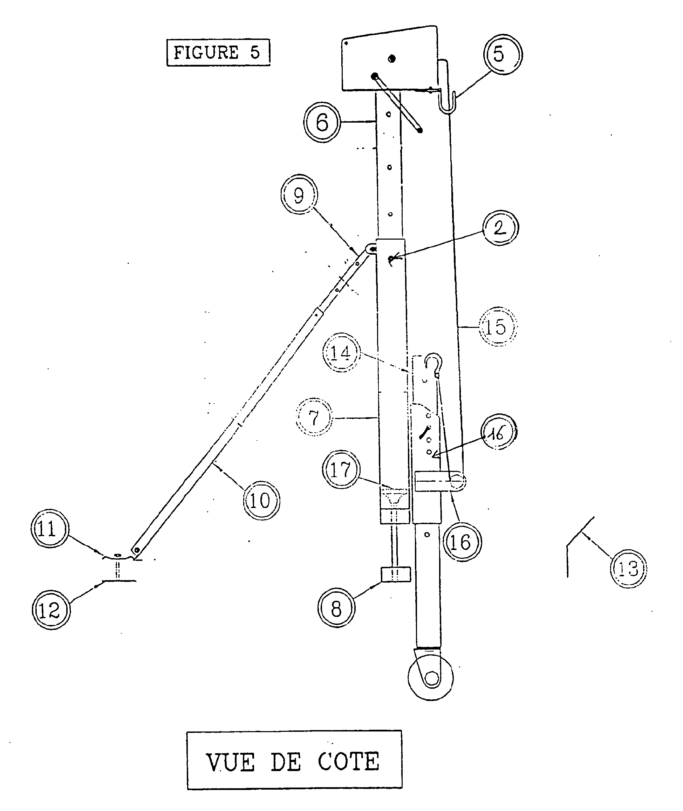

Le dispositif comprend un tube mâle (6) en acier rectangulaire percé d'une série trous, en haut de la partie mâle fixé par des boulons et écrous le treuil manuel (19) ou électrique avec un câble ou sangle et un crochet de levage (15) (figure 3 et 5)), un tube femelle (7) en acier rectangulaire de section supérieur au tube mâle (figures 3) percé d'un trou en haut de celui-ci pour recevoir la cheville métallique (2), elle même sécurisé par une goupille agricole (20) (figure 4), elle permet le réglage en hauteur de ce mât. Le mât vertical (figure 4) est soudé sur un tube horizontal de même section que la partie femelle verticale, elle même percée de part en part de trous laissant le passage des boulons à molettes (17).

La platine horizontale (8) en tube acier rectangulaire de même section que le mât partie femelle est percée de 4 trous et de tubes soudés et taraudés (figure 4) afin de recevoir les boulons à molette de serrage (17). Le tirant réglable (9 et 10) en longueur est composé de deux tubes coulissant l'un dans l'autre, mâle (9) et femelle (10) (figure 3). Le tube femelle (10) est fixée avec un boulon sur la pièce supérieure (11) de l'ensemble de pièces formant l'étau serré avec les boulons à molette ou à l'un des deux boulons de fixation de l'attelage au limon, coté attelage (figure 3 ). La partie femelle (10) est percée d'une série de trous de même diamètre que les trous de la partie mâle. La partie mâle de diamètre inférieure à la partie femelle est percée d'une série de trous et de même diamètre que la partie la partie femelle. Celle-ci est fixée à l'aide d'un boulon à une patte soudée sur la partie haute fixe du mât. Une goupille agricole (20) permet le réglage en longueur du tirant (figure 3).

L'ensemble des pièces en acier, (dessus, dessous et les 2 boulons à molettes) (11 et 12) permettent le choix soit de se fixer sur l'un des boulons de l'attelage, soit en étau avec des deux boulons à molette sur de l'attelage de la remorque.

Lorsqu'un conducteur seul veut reculer pour atteler sa remorque à son véhicule il est impossible pour lui de voir à la fois le bout de l'attelage de sa remorque et la boule de son véhicule. Le rétroviseur (4) réglable est fixé en haut de la partie mâle du mat (6) permet de remédier à cette situation. Celui ci est fixé par les boulons de fixation du treuil (19) (figure 3).

Les bennes des remorques n'ont généralement pas de système pour recevoir de crochet de levage. Une patte percée de trous (13) venant se fixée sur la partie avant et en bas de la benne, fixé avec écrous et boulons, cette patte permet d'accrocher le crochet du treuil (figure 1 et 3).

Lorsqu'un utilisateur souhaite utiliser sa remorque pour transporter un vélo, celui-ci peut 1' intercaler entre la benne et le lève benne monte charge. Un support de vélos (5) est fixé en haut de la partie mâle du mat (6). Celui ci est boulonné sur les boulons du treuil (figure 3).

Il est difficile de ranger une roue de secours dans une coffre de voiture ou dans une remorque bien remplie, et lorsque l'on crève la roue de la remorque il faut vider celle-ci pour la trouver, le lève benne, monte charge dispose sur le coté d'un porte roue de secours(18) celui-ci étant réglable en hauteur sur la partie femelle du mât (7) il permet de s'adapter au diamètre de la roue de secours de la remorque, constitué d'une bride sur lequel est soudé une tige filetée et une molette de serrage (18) (figure 3).

Le lève benne monte charge, une fois démonter de la remorque, peut être transporté par une poignée (3) est fixée sur la partie femelle du mât (7) (figure 3).

En général les remorques sont vendues sans roue jockey, celle-ci permettant de mettre à niveau la remorque afin de pouvoir l'atteler au véhicule tracteur. Le lève benne Monte charge avec sa roue jockey réglable en hauteur par la sangle et le crochet (15) du treuil à l'aide d'une poulie (16) de retour ( figure 5) permet d'y remédié à ce manque. Le crochet de levage vient inséré dans la partie haute male de la roue jockey, lorsqu'on actionne le treuil, la partie male de la roue jockey coulisse dans la partie femelle, une fois à la bonne hauteur une cheville (21) traverse l'ensemble de la partie male (14) et femelle (16), elle même sécurisé par une goupille agricole (figure 3).

## Revendications

1. Dispositif de lève benne, de monte charge et multi-usages pour les remorques particulière, **caractérisé en ce qu**'un mât en acier formé de deux tubes coulissants l'un dans l'autre, mâle et femelle, d'une platine horizontale, d'un tirant réglable en longueur (9 et 10), d'un ensemble de pièces de fixation coté attelage (11 et 12) et une patte percée de trous coté benne (13) permettant d'accrocher le crochet de levage, d'un porte vélo (5), d'un rétroviseur (4),d'un porte roue de secours(18) et roues jockey réglable (14).

2. Dispositif selon la revendication 1 **caractérisé en ce que** le tube mâle en acier (6) est percé d'une série trous, en haut de la partie mâle est fixé par des boulons et écrous le treuil manuel ou électrique (19) avec un câble ou sangle et un crochet de levage(15).

3. Dispositif selon la revendication 1, **caractérisé en ce que** le tube femelle (7) est percé d'un trou pour recevoir la cheville métallique (2), elle- même sécurisé par une goupille agricole (20), permet le réglage en hauteur de ce mât. Le mât vertical est soudé sur un tube horizontal de même section que la partie femelle verticale, elle même percée de part en part de trous laissant le passage des boulons à molette (17).

4. Dispositif selon la revendication 1 ou 3, **caractérisé en ce que** la platine horizontale (8) en tube acier de même section que le mât partie femelle, percée de 4 trous et de tubes soudés et taraudés, afin de recevoir les boulons à molettes (17) de serrage.

5. Dispositif selon la revendication 1 **caractérisé en ce que** le tirant est réglable (9 et 10), composé de deux tubes coulissant l'un dans l'autre, mâle (9) / femelle (10). Le tube femelle (10) est fixée avec un boulon sur la pièce supérieure de l'ensemble de pièces (11 et 12) formant un étau serré avec les boulons à molette ou à l'un des deux boulons de fixation de l'attelage au limon coté attelage. La partie femelle (10) est percée d'une série de trous . La partie mâle (9) de diamètre inférieure à la partie femelle est percée d'une série de trous et de même diamètre que la partie femelle, fixée à l'aide d'un boulon par une patte soudée sur la partie haute fixe du mât. Une goupille agricole (1) permet le réglage en longueur du tirant.

6. Dispositif selon l'une quelconque des revendications précédentes **caractérisé en ce qu**e les pièces en acier se fixent sur l'un des boulons de l'attelage ou en étau avec des boulons à molettes sur l'attelage de la remorque.

7. Dispositif selon les revendications 1 et 2, **caractérisé en ce que** le rétroviseur (4) réglable est fixé en haut de la partie mâle du mat (6). Celui ci est fixé par les boulons de fixation du treuil (19).

8. Dispositif selon la revendication 1 **caractérisé en ce que** la patte percée de trous (13) venant se fixer sur la partie avant et en bas de la benne en bas avec des écrous et boulons. Cette patte permet d'accrocher le crochet du treuil.

9. Dispositif selon les revendications 1 et 2, **caractérisé en ce que** le porte vélo (5) est fixé en haut de la partie mâle du mat (6). Celui ci est fixé par les boulons de fixation du treuil (19).

10. Dispositif selon les revendications 1 et 3, **caractérisé en ce que** le porte roue de secours (18) est réglable en hauteur sur la partie femelle du mât constitué d'une bride sur lequel est soudé une tige filetée et une molette de serrage.

11. Dispositif selon les revendications 1 et 3, **caractérisé en ce que** la poignée de transport (3) est fixée sur la partie femelle du mât.

12. Selon les revendications 1, 2 et 3, **caractérisé en ce que** la roue jockey (14) soit réglable en hauteur par la sangle et le crochet (15) du treuil à l'aide d'une poulie (16)de retour.

## Claims

1. Multi-purpose hoist and skip bucket lift device for private trailers **characterized by** a steel pole composed of two tubes, male and female, sliding inside each other, an horizontal plate, a rod adjustable lengthways (9 & 10), a set of fastening pieces on the attachment side (11 & 12) and a tab with holes drilled into it on the skip bucket side permitting to hitch the lifting hook, a bicycle rack (5), a mirror (4), a spare wheel rack (18), an adjustable jockey wheel rack (14).

2. Device in accordance with claim 1 **characterized by** the male steel tube (6) with a series of holes being drilled into it, at the top of the male part, the manual or electrical winch (19) is fixed with nuts and bolts, with a wire rod or a strap, and a lifting hook (15).

3. Device in accordance with claim 1 **characterized by** the female tube (7) with one hole drilled into it to receive a metal peg (2), the latter being secured by an agricultural pin, permitting to adjust the height of this pole. The vertical pole is welded on the horizontal tube of identical section to the vertical female part, which itself has holes drilled right through into it permitting the knurled bolts (17) to go through.

4. Device in accordance with claims 1 and 3, **characterized by** the horizontal plate in steel tubing of identical section to the female part of the pole, with 4 holes drilled into it and tubes welded and tapped, in order to receive the tightening knurled bolts (17).

5. Device in accordance with claim 1 **characterized by** the rod being adjustable (9 & 10), composed of two tubes, male (9) / female (10), sliding inside each other. The female tube (10) is fixed with a bolt on the top piece of the set of pieces (11 & 12) forming a vice tightened with the knurled bolts or to one of the tie bolts of the attachment of the shaft on the attachment side. The female part (10) has holes drilled into it. The male part (9) of inferior diameter to the female part has a series of holes drilled into and is of identical diameter to the female part, fixed with a bolt by a tab welded on the top fixed part of the pole. The rod can be adjusted lengthways with an agricultural pin.

6. Device in accordance with any of the previous claims **characterized by** the steel pieces being fixed on one of the attachment bolts or in vice with knurled bolts on the attachment of the trailer.

7. Device in accordance with claims 1 and 2 **characterized by** the adjustable mirror (4) being fixed at the top of the male part of the pole (6). It is fixed with the tie bolts of the winch (19).

8. Device in accordance with claim 1 **characterized by** the tab with holes drilled into it being fixed on the front part and at the bottom of the skip bucket with nuts and bolts. This tab permits to hitch the winch hook.

9. Device in accordance with claims 1 and 2 **characterized by** the bicycle rack (5) being fixed at the top of the male part of the pole (6). It is fixed with the tie bolts of the winch.

10. Device in accordance with claims 1 and 3 **characterized by** the spare wheel rack (18) whose height is adjustable on the female part of the pole composed of a clamp with a threaded rod and a tightening knob welded on.

11. Device in accordance with claims 1 and 3 **characterized by** the carrying handle (3) being fixed on the female part of the pole.

12. Device in accordance with claims 1, 2 and 3 **characterized by** the jockey wheel (14) whose height is adjustable with the strap and the winch hook (15) thanks to a return pulley (16).

## Patentansprüche

1. Kipperheber-, Hebewerk- und Mehrzweck-Vorrichtung für Einzelanhänger, die durch einen Stahlmast **gekennzeichnet** ist, der gebildet ist aus zwei ineinander gleitenden Rohren, d.h. einem Außen- und einem Innenrohr, einer Horizontalplatte, einer in der Länge einstellbaren Aussteifung (9 und 10), einer Einheit von Befestigungsteilen an der Kupplungsseite (11 und 12) und einem durchlochten Anhängestück an der Kipperseite (13), das es erlaubt, den Lasthaken anzuhängen, einem Fahrradträger (5), einem Rückspiegel (4), einem einstellbaren Träger für Reserverad (18) und für Jockeyräder (14).

2. Vorrichtung nach Anspruch 1, **dadurch gekennzeichnet, dass** das Innenstahlrohr (6) mit einer Serie von Löchern durchbohrt ist, wobei oben am Innenteil die manuelle oder elektrische Winde (19) durch Bolzen und Muttern mit einem Kabel oder Gurt und einem Lasthaken (15) befestigt ist.

3. Vorrichtung nach Anspruch 1, **dadurch gekennzeichnet, dass** das Außenrohr (7) mit einem Loch durchbohrt ist, um den Metallstift (2) aufzunehmen, der seinerseits durch einen Landwirtschaftsstift (20) gesichert ist, um die Höheneinstellung von diesem Mast zu erlauben. Der Vertikalmast ist auf ein Horizontalrohr mit demselben Querschnitt wie der vertikale Außenteil geschweißt, der seinerseits durchgehend mit Löchern durchbohrt ist, um den Durchgang des Rollbolzens (17) zu ermöglichen.

4. Vorrichtung nach Anspruch 1 oder 3, **dadurch gekennzeichnet, dass** die Horizontalplatte (8) aus Stahlrohr mit demselben Querschnitt wie der Mast-Außenteil durchbohrt ist mit 4 Löchern und Schweiß- und Gewinderohren, um den Spannrollbolzen (17) aufzunehmen.

5. Vorrichtung nach Anspruch 1, **dadurch gekennzeichnet, dass** die Aussteifung einstellbar ist (9 und 10), wobei sie sich aus zwei ineinander gleitenden Rohren, d.h. Außenrohr (9) / Innenrohr (10), zusammensetzt. Das Außenrohr (10) ist mit einem Bolzen am oberen Teil der Teileinheit (11 und 12), die einen gespannten Schraubstock mit den Rollbolzen bildet, befestigt, oder an einem Befestigungsbolzen der Kupplung an der Wange an der Kupplungsseite befestigt. Der Außenteil (10) ist mit einer Serie von Löchern durchbohrt. Der Innenteil (9) mit kleinerem Durchmesser als der Außenteil ist mit einer Serie von Löchern durchbohrt, die denselben Durchmesser wie der Außenteil aufweisen, wobei er mit Hilfe eines Bolzens durch ein Anhängestück, das am festen oberen Teil des Masts geschweißt ist, befestigt ist. Ein Landwirtschaftsstift (1) ermöglicht die Längeneinstellung der Aussteifung.

6. Vorrichtung nach einem der vorgehenden Ansprüche, **dadurch gekennzeichnet, dass** die Teile aus Stahl (Figur 11 oder 12) an einem der Bolzen der Kupplung oder eingespannt mit Rollbolzen an der Kupplung des Anhängers befestigt werden.

7. Vorrichtung nach Ansprüchen 1 und 2, **dadurch gekennzeichnet, dass** der einstellbare Rückspiegel (4) oben am Innenteil des Masts (6) befestigt ist. Dieser ist durch die Befestigungsbolzen der Winde (19) befestigt.

8. Vorrichtung nach Anspruch 1 **dadurch gekennzeichnet, dass** das mit Löchern durchbohrte Anhängestück (13) am Vorderteil unten am Kipper unten mit Muttern und Bolzen befestigt wird. Dieses Anhängestück erlaubt es, den Haken der Winde anzuhängen.

9. Vorrichtung nach Ansprüchen 1 und 2, **dadurch gekennzeichnet, dass** der Fahrradträger (5) oben am Innenteil des Masts (6) befestigt ist. Dieser ist durch die Befestigungsbolzen der Winde (19) befestigt.

10. Vorrichtung nach Ansprüchen 1 und 3, **dadurch gekennzeichnet, dass** der Reserveradträger (18) in der Höhe einstellbar ist, am Außenteil des Masts und sich aus einem Flansch zusammensetzt, an dem eine Gewindestange und eine Spannrolle geschweißt sind.

11. Vorrichtung nach Ansprüchen 1 und 3, **dadurch gekennzeichnet, dass** der Transportgriff (3) am Außenteil des Masts befestigt ist.

12. Nach Ansprüchen 1, 2 und 3, **dadurch gekennzeichnet, dass** das Jockeyrad (14) durch den Gurt und den Haken (15) der Winde und mit Hilfe einer Umlenkrolle (16) in der Höhe einstellbar ist.
